# EUROPÄISCHE PATENTANMELDUNG

(11) **EP 1 671 850 A2**
(43) Veröffentlichungstag der Anmeldung: **21.06.2006**
(21) Anmeldenummer: 05026982.8
(22) Anmeldetag: 09.12.2005
(51) Int. Cl.: B60R 21/00

(54) **Gassackmodul**

(30) Priorität: 14.12.2004 DE 202004019325 U
(71) Anmelder: TRW Automotive Safety Systems GmbH, 63743 Aschaffenburg (DE)
(72) Erfinder: Frisch, Ralph, 63776 Mömbris (DE); Kienzner, Andreas, 63831 Wiesen (DE); Schneider, Michael, Dr., 63834 Sulzbach (DE)
(74) Vertreter: Kitzhofer, Thomas

(57) **Zusammenfassung**

Ein Gassackmodul für eine Fahrzeuginsassen-Rückhaltevorrichtung umfaßt einen Gasgenerator (12) zum Befüllen eines Gassacks (13), wenigstens eine in einem festen Bauteil des Gassackmoduls (10) gebildete Abströmöffnung (18), durch die das vom Gasgenerator (12) erzeugte und in den Gassack (13) geleitete Gas abströmen kann, und wenigstens eine Ventilklappe (16), die in einer Schließstellung die Abströmöffnung (18) verschließt und in einer Öffnungsstellung die Abströmöffnung (18) freigibt. Die Ventilklappe (16) ist bei nicht ausgelöstem Modul (10) in einer anfänglichen Schließstellung, und es ist wenigstens eine Rastvorrichtung vorgesehen, die die sich aus der Öffnungsstellung in die abschließende Schließstellung bewegende Ventilklappe (16) in der Schließstellung fixiert.

## Beschreibung

Die Erfindung betrifft ein Gassackmodul für eine Fahrzeuginsassen-Rückhaltevorrichtung, mit einem Gasgenerator zum Befüllen eines Gassacks, wenigstens einer in einem festen Bauteil des Gassackmoduls gebildeten Abströmöffnung, durch die das vom Gasgenerator erzeugte und in den Gassack geleitete Gas abströmen kann, und wenigstens einer Ventilklappe, die in einer Schließstellung die Abströmöffnung verschließt und in einer Öffnungsstellung die Abströmöffnung freigibt.

Für gewöhnlich soll bei einem Gassackmodul der Gassack mit dem vom Gasgenerator erzeugten Gas möglichst schnell befüllt werden. In bestimmten Fällen ist es allerdings wünschenswert, den Gassack nicht mit dem gesamten verfügbaren Gasvolumen zu befüllen, oder, allgemeiner, Gas ausströmen zu lassen, weshalb im Gassackmodul Abströmöffnungen vorgesehen sind, durch deren Freigabe der Druck im Gassack begrenzt werden kann.

Aus der US 2004/0051285 A1 ist ein Gassackmodul der eingangs genannten Art bekannt, bei dem die Ventilklappen, die zwei in einem Gasgeneratorträger gebildete Abströmöffnungen verschließen bzw. freigeben können, mittels Zugbändern mit einem einem Fahrzeuginsassen zugewandten Teil des Gassackgewebes verbunden sind. In einem Auslösefall befinden sich die Ventilklappen zunächst in der nach außen gerichteten Öffnungsstellung. Der Gassack wird also nicht mit dem gesamten zur Verfügung stehenden Gasvolumen befüllt. Tritt der sich entfaltende Gassack nun in Kontakt mit dem Fahrzeuginsassen, bevor sich der Gassack so weit entfaltet hat, daß die Zugbänder gestrafft sind, so bleiben die Abströmöffnungen offen. Dadurch wird der Druck des sich entfaltenden Gassacks und damit die auf den Fahrzeuginsassen ausgeübte Kraft reduziert. Befindet sich der Fahrzeuginsasse in einer Position, die weiter vom Gassackmodul entfernt ist, so entfaltet sich der Gassack ebenfalls, wie oben beschrieben, zunächst langsam bei geöffneten Abströmöffnungen. Sobald sich jedoch der Gassack so weit entfaltet hat, daß die Zugbänder gestrafft werden, ziehen diese die Ventilklappen nach innen, wodurch die Abströmöffnungen gegen den Innendruck des Gassacks verschlossen werden. Es strömt also kein oder nur noch wenig Gas durch die Abströmöffnungen ab, und das gesamte Gasvolumen wird zum Befüllen des Gassacks genutzt.

Weiterhin ist angedacht, das soeben beschriebene Gassackmodul derart auszubilden, daß die Ventilklappen im nicht ausgelösten Zustand des Gassacks zunächst geschlossen sind und sich erst im Auslösefall aufgrund des zunehmenden Drucks im Gassackinneren öffnen.

Die bisher beschriebene Lösung birgt einen Nachteil. Durch die dynamischen Vorgänge während der Entfaltung des Gassacks ist nicht immer sichergestellt, daß das Zugband gespannt bleibt und die Abströmöffnung gegen den Gassackinnendruck geschlossen hält. So ist es beispielsweise möglich, daß eine Restelastizität des Zugbandes in dessen Zugrichtung zu einer Schwingung führt und somit die Schließkraft beeinträchtigt.

Die Aufgabe der vorliegenden Erfmdung besteht folglich darin, das aus der US 2004/0051285 A1 bekannte Gassackmodul auf einfache und damit kostengünstige Weise derart weiterzubilden, daß die einmal geöffnete und durch das Zugband wieder geschlossene Ventilklappe sicher verschlossen bleibt.

Erfindungsgemäß ist dazu bei einem Gassackmodul der eingangs genannten Art die Ventilklappe bei nicht ausgelöstem Modul in einer anfänglichen Schließstellung, und es ist wenigstens eine Rastvorrichtung vorgesehen, die die sich aus der Öffnungsstellung in die abschließende Schließstellung bewegende Ventilklappe in der Schließstellung fixiert. Auf diese Weise wird ein sicheres und permanentes Verschließen der Ventilklappe gewährleistet, wodurch sich das vom Gasgenerator zur Verfügung gestellte Gasvolumen effektiver nutzen läßt.

Vorzugsweise handelt es sich bei der Rastvorrichtung um eine rein mechanische Vorrichtung, die besonders kostengünstig herstellbar und kaum störungsanfällig ist.

Gemäß einer bevorzugten Ausführungsform weist die Rastvorrichtung eine elastisch verformbare Rastfeder auf.

Die Rastfeder kann in der abschließenden Schließstellung die Rastvorrichtung bleibend verriegeln. Dadurch wird eine besonders einfach ausgebildete und dennoch effektive Rastvorrichtung geschaffen, die die Ventilklappe sicher in der abschließenden Schließstellung hält.

Vorzugsweise wird die Rastfeder vor Erreichen der abschließenden Schließstellung deformiert und bleibt in der abschließenden Schließstellung deformiert, wodurch sie die Rastvorrichtung sicher verriegelt.

Gemäß einer bevorzugten Ausführungsform kann die Rastvorrichtung zwei Stellungen einnehmen, eine Haltestellung in der anfänglichen Schließstellung, in der die Rastvorrichtung die Ventilklappe lösbar hält, und eine Verriegelungsstellung in der abschließenden Schließstellung. Die Rastvorrichtung erfüllt also zwei Funktionen. Sie verriegelt nicht nur die Ventilklappe in der abschließenden Schließstellung, sondern dient auch dazu, die Klappe in ihrer anfänglichen Schließstellung vor und bei dem Auslösen des Moduls so lange zu halten, bis der Gassackinnendruck einen gewissen Wert erreicht hat. Daher läßt sich durch entsprechende Ausgestaltung der Rastvorrichtung der zum Öffnen der Ventilklappe nötige Gassackinnendruck gezielt einstellen.

Eine besonders einfache und platzsparende Bauweise der Rastvorrichtung ergibt sich, wenn eine Rastfeder in der Haltestellung die Ventilklappe lösbar hält. Die Rastfeder ist z.B. ein separates, an der Klappe befestigtes Bauteil.

Vorteilhaft weist die Rastvorrichtung einen ersten Vorsprung auf, der im Bereich der Abströmöffnung am festen Bauteil des Gassackmoduls angeordnet ist, und einen zweiten Vorsprung, der an der Ventilklappe angeordnet ist.

Die Vorsprünge sind bevorzugt so ausgebildet, daß schräg verlaufende Abschnitte der beiden Vorsprünge beim Schließen der Ventilklappe aufeinander gleiten. Durch die dabei auftretende Reibung und mögliche Verformung der Vorsprünge wird beim Schließen der Ventilklappe kinetische Energie abgebaut, was eine geringere Belastung des Klappensystems zur Folge hat.

Vorzugsweise weist der erste Vorsprung einen Anschlag auf, an dem eine Rastfeder nach erfolgter Öffnung und darauffolgender Schließung anschlägt. Dabei befindet sich die Rastfeder im deformierten Zustand, wobei durch den Anschlag auf einfache Weise verhindert wird, daß die Rastfeder in ihren nicht deformierten Ausgangszustand zurückkehrt. So ist mit geringem Aufwand sichergestellt, daß die Ventilklappe in ihrer abschließenden Schließstellung sicher und permanent verschlossen bleibt.

Das feste Bauteil des Gassackmoduls kann in einem Spritzgußverfahren aus Kunststoff hergestellt sein, wobei als zweite Komponente ein flexibles Scharnier angespritzt wird, das die Ventilklappe mit dem festen Bauteil des Gassackmoduls verbindet. Dies bedeutet einen vergleichsweise geringen Herstellungsaufwand bei gleichzeitiger guter Haltbarkeit der Klappenvorrichtung.

Weitere Merkmale und Vorteile der Erfmdung ergeben sich aus der nachfolgenden Beschreibung einer bevorzugten Ausführungsform anhand der beigefügten Zeichnung. In dieser zeigen:
- Figur 1 eine Perspektivansicht eines Generatorträgers eines erfindungsgemäßen Gassackmoduls;
- Figur 2 einen perspektivischen Halbschnitt durch das Gassackmodul, der die anfängliche Schließstellung der Ventilklappe zeigt;
- Figur 3 einen perspektivischen Halbschnitt durch das Gassackmodul, der die Ventilklappe in ihrer Öffnungsstellung zeigt; und
- Figur 4 eine vergrößerte Detailschnittansicht durch das Gassackmodul mit der Ventilklappe in der abschließenden Schließstellung.

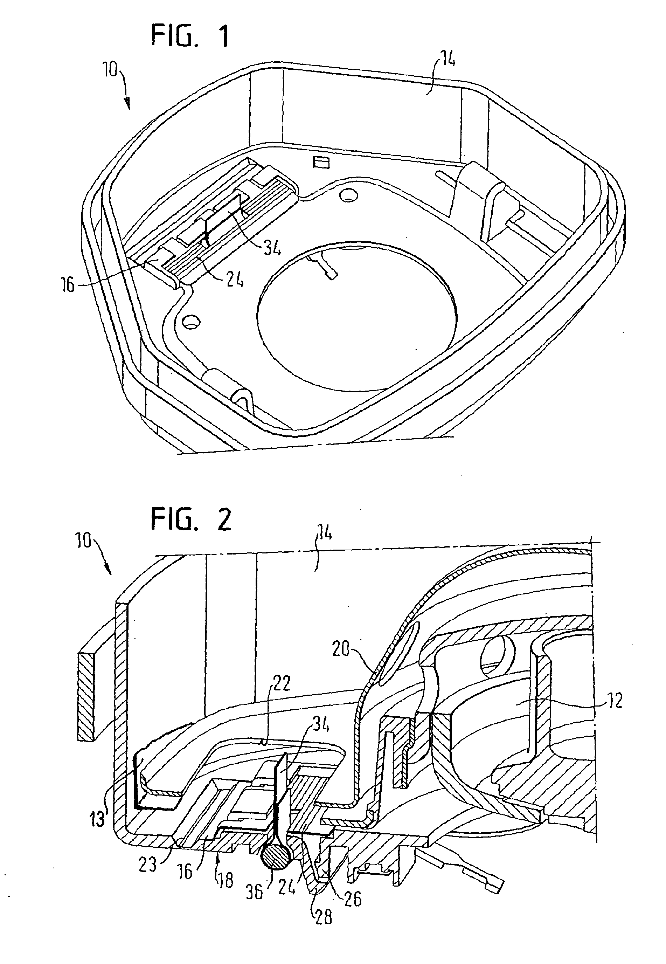

Die Figuren 1 und 2 zeigen ausschnittsweise ein Gassackmodul 10, das insbesondere für einen Einsatz als Fahrergassackmodul vorgesehen, jedoch nicht darauf beschränkt ist. Das Gassackmodul 10 weist einen Gasgenerator 12 und einen Gassack 13 auf. In einem festen Bauteil des Gassackmoduls 10 in Form eines Generatorträgers 14 ist eine mittels einer Ventilklappe 16 verschließbare Abströmöffnung 18 vorgesehen. Um den Gasgenerator 12 herum ist ein Käfig 20 angeordnet, der im Bereich der Abströmöffnung 18 in seinem Flansch ebenfalls eine Ausnehmung 22 aufweist. Der Gassack 13 ist zweckmäßig seitlich außerhalb der Ventilklappe 16 am Gassackmodul 10 befestigt, hier zwischen dem Käfig 20 und dem Generatorträger 14 geklemmt. Alternativ könnte der Gassack auch im Bereich der Abströmöffnung 18 über eine Ausströmöffnung verfügen...

Die Abströmöffnung 18 und die Ventilklappe 16 bilden ein Ventil zur Begrenzung des Gassackinnendrucks. Dabei kann die Ventilklappe 16 einstückig über ein Scharnier 23 am Generatorträger 14 angebunden sein. Eine weitere Möglichkeit besteht im Falle eines Generatorträgers aus Kunststoff darin, das Scharnier 23 in einem Zweikomponenten-Spritzgußverfahren als flexible zweite Komponente anzuspritzen.

Weiterhin ist eine Rastvorrichtung vorgesehen, die eine an der Ventilklappe 16 angeordnete, elastisch verformbare Rastfeder 24 aufweist. Die Rastfeder 24 ist mit der Ventilklappe 16 fest verbunden. Die Rastvorrichtung umfaßt ferner einen ersten Vorsprung 26, der im Bereich der Abströmöffnung 18 am Generatorträger 14 angeordnet ist, sowie einen im Querschnitt hakenförmigen zweiten Vorsprung 28, der an der Ventilklappe 16 angeordnet ist. In der gezeigten Ausführungsform ist der erste Vorsprung 26 einstückig mit dem Generatorträger 14 ausgebildet, und die Ventilklappe 16 geht ebenfalls einstückig in den zweiten Vorsprung 28 über. Der ebenfalls im Querschnitt hakenförmige erste Vorsprung 26 weist einen schräg verlaufenden Abschnitt 30 auf, der in den Figuren 1 und 2 an einem ebenfalls schräg verlaufenden Abschnitt 32 des zweiten Vorsprungs 28 anliegt. Schließlich ist ein Zugelement 34 (z.B. Zugband) vorgesehen, dessen eines Ende mit dem Gewebe des Gassacks 13 und dessen anderes Ende über einen Riegelbolzen 36 mit der Ventilklappe 16 verbunden ist.

Die Figuren 1 und 2 zeigen das Gassackmodul 10 im nicht ausgelösten Zustand. In diesem Zustand ist die Ventilklappe 16 in einer anfänglichen Schließstellung, und die Rastvorrichtung nimmt eine Haltestellung ein, in der sie die Ventilklappe 16 lösbar hält. In der Haltestellung befindet sich die Rastfeder 24 in dem in den Figuren gezeigten nicht verformten Zustand, in welchem sie oberhalb des ersten Vorsprungs 26 auf dem Generatorträger 14 aufliegt. Dadurch hält die Rastfeder 24 die Ventilklappe 16 in ihrer anfänglichen Schließstellung.

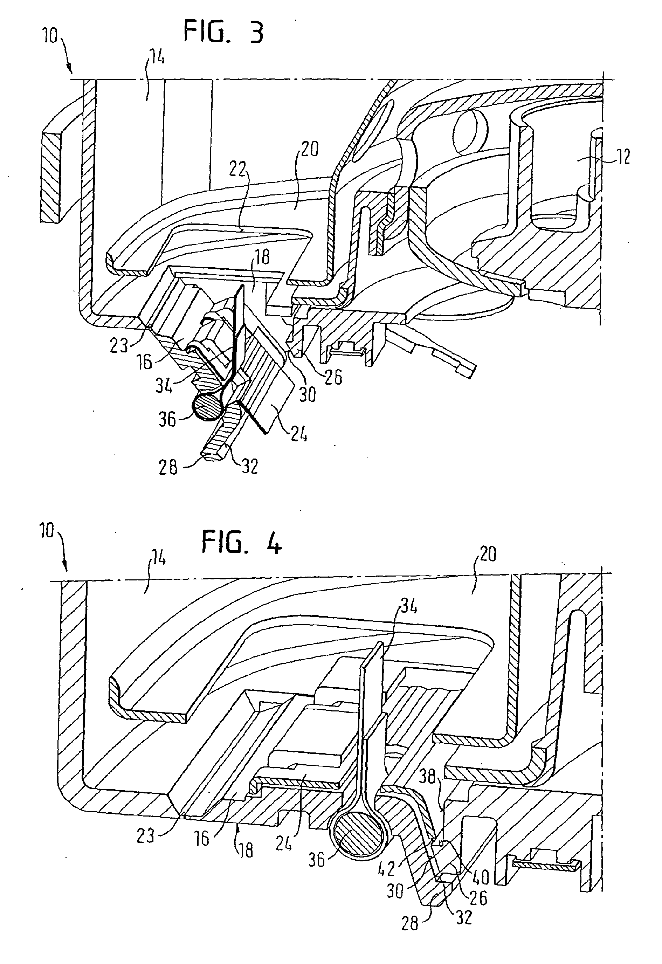

Wird nun das Gassackmodul 10 ausgelöst, so entsteht im Gassack 13 ein Druck, der durch die Ausnehmung 22 im Käfig 20 auch auf die Ventilklappe 16 wirkt. Die daraus resultierende Kraft führt zu einer elastischen Verformung der Rastfeder 24, die sich vergleichsweise einfach senkrecht zu ihrer Längsachse nach oben biegen läßt. Dadurch kann letztlich die Ventilklappe 16 in die in Figur 3 gezeigte Öffnungsstellung gelangen, und die Abströmöffnung 18 wird freigegeben. In der Öffnungsstellung kehrt die Rastfeder 24 aufgrund ihrer Elastizität in ihre relativ zur Ventilklappe 16 nicht verbogene Ausgangslage zurück.

Im Falle, daß der Gassack 13 sich frei entfalten kann, wird die Ventilklappe 16 durch das nun gestraffte Zugelement 34 in die abschließende Schließstellung bewegt, die in Figur 4 dargestellt ist. Dabei verhindert die spezielle Ausführung der Rastvorrichtung, daß die Rastfeder 24 in ihre ursprüngliche Ausgangslage (vgl. Figuren 1 und 2) zurückkehren kann. Bei der Schließbewegung der Ventilklappe 16 wird nämlich die Rastfeder 24 durch den schräg verlaufenden Abschnitt 30 des am Generatorträger 14 angeordneten ersten Vorsprungs 26 elastisch nach unten verformt und kommt am schräg verlaufenden Abschnitt 32 des zweiten Vorsprungs 28 der Ventilklappe 16 zu liegen. Die Längsabmessung der Rastfeder 24 und die Form des ersten Vorsprungs 26 sind so gewählt, daß die Rastfeder 24 keinesfalls in ihre Ausgangslage zurückkehren kann. Die Rastfeder 24 nimmt daher nun die in Figur 4 gezeigte Stellung ein, in der sie am schräg verlaufenden Abschnitt 32 des zweiten Vorsprungs 28 sowie an einer senkrechten Anschlagfläche 38 des ersten Vorsprungs 26 anliegt.

Es ist eine weitere, waagrechte Anschlagfläche 40 am ersten Vorsprung 26 vorgesehen, die mit einer Stirnfläche 42 der Rastfeder 24 in Berührung tritt, falls die Ventilklappe 16 anfängt, sich durch den Gassackinnendruck nach unten zu bewegen. Somit nimmt die Ventilklappe 16 zwischen dem zweiten Vorsprung 28 und der Rastfeder 24 den ersten Vorsprung 26 auf und ist in beiden Schwenkrichtungen gegen Bewegung verriegelt. Da die abgewinkelte Rastfeder 24 durch die von der Ventilklappe 16 ausgeübte Kraft hauptsächlich auf Knickung beansprucht wird und demgegenüber eine hohe Stabilität aufweist, wird ein erneutes Öffnen der Ventilklappe 16 wirkungsvoll verhindert.

## Patentansprüche

1. Gassackmodul für eine Fahrzeuginsassen-Rückhaltevorrichtung, mit einem Gasgenerator (12) zum Befüllen eines Gassacks (13), wenigstens einer in einem festen Bauteil des Gassackmoduls (10) gebildeten Abströmöffnung (18), durch die das vom Gasgenerator (12) erzeugte und in den Gassack (13) geleitete Gas abströmen kann, und wenigstens einer Ventilklappe (16), die in einer Schließstellung die Abströmöffnung (18) verschließt und in einer Öffnungsstellung die Abströmöffnung (18) freigibt, **dadurch gekennzeichnet, daß** die Ventilklappe (16) bei nicht ausgelöstem Modul (10) in einer anfänglichen Schließstellung ist und wenigstens eine Rastvorrichtung vorgesehen ist, die die sich aus der Öffnungsstellung in die abschließende Schließstellung bewegende Ventilklappe (16) in der Schließstellung fixiert.

2. Gassackmodul nach Anspruch 1, **dadurch gekennzeichnet, daß** es sich bei der Rastvorrichtung um eine rein mechanische Vorrichtung handelt.

3. Gassackmodul nach einem der vorhergehenden Ansprüche, **dadurch gekennzeichnet, daß** die Rastvorrichtung eine elastisch verformbare Rastfeder (24) aufweist.

4. Gassackmodul nach Anspruch 3, **dadurch gekennzeichnet, daß** die Rastfeder (24) in der abschließenden Schließstellung die Rastvorrichtung bleibend verriegelt.

5. Gassackmodul nach Anspruch 4, **dadurch gekennzeichnet, daß** die Rastfeder (24) vor Erreichen der abschließenden Schließstellung deformiert wird und in der abschließenden Schließstellung deformiert bleibt.

6. Gassackmodul nach einem der vorhergehenden Ansprüche, **dadurch gekennzeichnet, daß** die Rastvorrichtung zwei Stellungen einnehmen kann, eine Haltestellung in der anfänglichen Schließstellung, in der die Rastvorrichtung die Ventilklappe (16) lösbar hält, und eine Verriegelungsstellung in der abschließenden Schließstellung.

7. Gassackmodul nach Anspruch 6, **dadurch gekennzeichnet, daß** eine Rastfeder (24) in der Haltestellung die Ventilklappe (16) lösbar hält.

8. Gassackmodul nach einem der vorhergehenden Ansprüche, **dadurch gekennzeichnet, daß** die Rastvorrichtung einen ersten Vorsprung (26) aufweist, der im Bereich der Abströmöffnung (18) am festen Bauteil des Gassackmoduls (10) angeordnet ist, und daß die Rastvorrichtung einen zweiten Vorsprung (28) aufweist, der an der Ventilklappe (16) angeordnet ist.

9. Gassackmodul nach Anspruch 8, **dadurch gekennzeichnet, daß** schräg verlaufende Abschnitte (30, 32) der beiden Vorsprünge (26, 28) beim Schließen der Ventilklappe (16) aufeinander gleiten.

10. Gassackmodul nach Anspruch 8 oder 9, **dadurch gekennzeichnet, daß** der erste Vorsprung (26) einen Anschlag (38, 40) aufweist, an dem eine Rastfeder (24) nach erfolgter Öffnung und darauffolgender Schließung anschlägt.

11. Gassackmodul nach einem der vorhergehenden Ansprüche, **dadurch gekennzeichnet, daß** das feste Bauteil des Gassackmoduls (10) in einem Spritzgußverfahren aus Kunststoff hergestellt ist, wobei als zweite Komponente ein flexibles Scharnier (23) angespritzt wird, das die Ventilklappe (16) mit dem festen Bauteil des Gassackmoduls (10) verbindet.

12. Gassackmodul nach einem der vorhergehenden Ansprüche, **dadurch gekennzeichnet, daß** ein Zugelement (34) vorgesehen ist, dessen eines Ende mit dem Gewebe des Gassacks (13) und dessen anderes Ende mit der Ventilklappe (16) verbunden ist.
